# EUROPÄISCHE PATENTSCHRIFT

(11) **EP 1 537 037 B1**
(45) Veröffentlichungstag und Bekanntmachung des Hinweises auf die Patenterteilung: **27.12.2006**
(21) Anmeldenummer: 03748005.0
(22) Anmeldetag: 11.09.2003
(51) Int. Cl.: B65G 47/71

(54) **VORRICHTUNG ZUM AUFTEILEN EINES UNGEORDNETEN STROMES VON ZYLINDRISCHEN GEGENSTÄNDEN, ZUM BEISPIEL GETRÄNKEFLASCHEN, AUF MEHRERE GASSEN**
DEVICE FOR DIVIDING A DISORDERLY FLOW OF CYLINDRICAL OBJECTS, FOR EXAMPLE DRINKS BOTTLES, INTO SEVERAL PATHWAYS
DISPOSITIF POUR REPARTIR UN FLUX DESORDONNE D'OBJETS CYLINDRIQUES, PAR EXEMPLE DE BOUTEILLE DE BOISSON, DANS PLUSIEURS COULOIRS

(30) Priorität: 12.09.2002 DE 20214153 U
(43) Veröffentlichungstag der Anmeldung: 08.06.2005
(73) Patentinhaber: HEUFT SYSTEMTECHNIK GMBH, 56659 Burgbrohl (DE)
(72) Erfinder: HEUFT, Bernhard, 56659 Burgbrohl (DE); KRISTANDT, Gerd, 67551 Worms (DE)
(74) Vertreter: Gritschneder, Martin
(86) Internationale Anmeldenummer: PCT/EP2003/010112
(87) Internationale Veröffentlichungsnummer: WO 2004/026739

(56) Entgegenhaltungen:
- EP-A- 1 038 808
- DE-B- 1 246 526
- US-A- 2 941 650
- US-A- 3 874 494
- US-A- 4 173 276
- US-A- 4 966 272
- US-A- 5 235 996

## Beschreibung

Die Erfindung betrifft eine Vorrichtung zum Aufteilen eines ungeordneten Stromes von vorzugsweise zylindrischen Gegenständen, insbesondere Getränkeflaschen, auf mehrere Gassen, in denen die Gegenstände einzeln aufeinander folgend transportiert werden. Die Vorrichtung weist eine Transporteinrichtung für die Gegenstände auf, wobei die Transporteinrichtung ein oder mehrere angetriebene Transportbänder und seitliche Geländer aufweist. Die Transportbänder sind im Allgemeinen in geringem Abstand parallel nebeneinander verlaufend angeordnet, so dass sie nahezu eine geschlossene Transportfläche bilden und die Gegenstände von einem Transportband auf das andere gleiten können. Die Vorrichtung weist ferner einen Gasseneinteiler, der mehrere bewegliche Treilereinrichtungen enthält, die den Strom von transportierten Gegenständen teilen, einem Rahmen, an dem die Teilereinrichtungen befestigt sind, und eine Einrichtung zum Antrieb des Gassenteinteilers auf.

Derartige Aufteilvorrichtungen werden bei Getränkeabfüllanlagen zwischen der Abfülleinrichtung und der Verpackungsstation eingesetzt. Die von der Abfülleinrichtung kommenden Getränkeflaschen werden dabei zunächst in einem Puffer gesammelt. Der Puffer besteht aus einem von mehreren nebeneinander liegenden Transportbändern gebildeten Bereich, der eine Verbreiterung der Transporteinrichtung darstellt. Aus diesem Puffer werden die Flaschen durch Staudruck zu der Aufteilvorrichtung transportiert. Die Verteilung der Flaschen auf einzelne Gassen ist notwendig, da die Flaschen nur so von der Verpackungsstation aufgenommen werden können und dann in Kästen oder sonstige Verpackungen mit jeweils einer bestimmten Anzahl von Flaschen eingesetzt werden können.

Bei Aufteilvorrichtungen besteht das Problem, dass sich die Flaschen verkeilen können oder Brücken bilden und dann nicht mehr von der Transporteinrichtung mitgenommen werden.

Aus US 4 173 276 ist eine gattungsgemäße Aufteilvorrichtung bekannt, bei der die Teilereinrichungen an ihrem abstromseitigen Ende festgelegt sind und an ihrem aufstromseitigen Ende an einem Bügel befestigt sind, der die Transporteinrichtung überspannt und durch einen Antrieb quer zur Transporteinrichtung hin- und herbewgbar ist.

Aus EP 1 038 808 ist eine Aufteilvorrichtung bekannt, bei der der ungeordnete Strom von Flaschen auf vier Gassen verteilt wird. Zwischen den beiden seitlichen Geländern sind dazu drei Teilereinrichtungen angeordnet, wobei die mittlere etwas weiter vorsteht. Die vorderen Enden der Teilereinrichtungen sind dabei als eine schwenkbare Klappe ausgebildet, die durch einen Motor bewegt werden. Mittels Sensoren wird das Vorliegen einer Verkeilung der Gegenstände erkannt und bei Auftreten einer Verkeilung werden die Klappen durch den Motor verschwenkt.

Aus DE-C2-39 26 735 ist eine ähnliche Aufteilvorrichtung bekannt, wobei die Flaschen auf acht parallel nebeneinander liegende Gassen verteilt werden. Die vorderen Enden der Teilereinrichtungen sind dabei gestaffelt angeordnet und die mittlere Teilereinrichtung steht am weitesten vor. Um das Einlaufen der Flaschen in die Gassen zu erleichtern, sind die Teilereinrichtungen quer zur Transportrichtung beweglich.

Kunststoff(PET)-Flaschen neigen aufgrund ihrer Nachgiebigkeit und dem größeren Reibungskoeffizienten von Kunststoff besonders stark dazu, sich gegenseitig zu verkeilen und dadurch eine Blockierung zu verursachen.

Der Erfindung liegt die Aufgabe zugrunde, eine Vorrichtung zum Verteilen eines ungeordneten Stromes von Gegenständen auf einzelne Gassen zu schaffen, die das Auftreten derartiger Blockierungen auch bei Kunststoff-Flaschen weitgehend verhindert.

Erfindungsgemäß wird diese Aufgabe dadurch gelöst, dass die Teilereinrichtungen mittels der Antriebseinrichtung gleichzeitig in Transportrichtung und quer dazu eine Hin- und Herbewegung ausführen.

Die Teilereinrichtungen sind an einem gemeinsamen Rahmen befestigt, der vorzugsweise über der Transporteinrichtung angeordnet ist. Die Teilereinrichtungen können Platten sein oder aus einzelnen Stangen zusammengesetzte Geländer sein, die von dem Rahmen abgehängt sind, so dass sie sich in geringem Abstand über der Transporteinrichtung befinden. Im Allgemeinen verlaufen die Teilereinrichtungen dabei parallel zur Transportrichtung. Sie können jedoch auch unter einem Winkel dazu verlaufen. Entlang der aufstromseitigen Kanten der Teilereinrichtungen erstrecken sich Rollen von einigen Millimeter Durchmesser.

Die Transportgeschwindigkeit wird im Allgemeinen so eingestellt, dass sich die Gegenstände vor dem Gasseneinteiler stauen. Dies wird dadurch erreicht, dass die Transporteinrichtung die Gegenstände schneller heranführt, als sie in der nachfolgenden Verpackungsstation verarbeitet werden. Die Gegenstände stehen dadurch unter Staudruck. In Folge des Staudrucks ordnen sich die kreisförmigen Gegenstände dabei entsprechend einer zweidimensionalen hexagonalen Kugelpackung an.

Damit sich die Gegenstände auf die einzelnen Gassen verteilen können, muss der seitliche Abstand der Geländer vor den Teilereinrichtungen etwas vergrößert werden. Diese Vergrößerung beginnt etwa in einem dem Durchmesser der Gegenstände entsprechenden Abstand vor der Teilereinrichtung.

Vorzugsweise steht die mittlere Teilereinrichtung entgegen der Transportrichtung vor und sind die vorderen Enden der seitlich davon angeordneten Teilereinrichtungen gestaffelt nach hinten versetzt. Die Vergrößerung des Abstandes des seitlichen Geländer ist entsprechend dieser Staffelung stufenförmig ausgebildet. Die Höhe der Stufen ergibt sich dabei jeweils aus dem zusätzlichen Platzbedarf der Gegenstände, wenn sie aus der hexagonalen Kugelpackung in die einzelnen Gassen eintreten, wobei auch die Dicke der Teilereinrichtungen zu berücksichtigen ist. Die Stufenhöhe entspricht daher etwa 10 bis 30 % des Durchmessers der Gegenstände. Vorzugsweise findet die Verbreiterung des Abstandes der seitlichen Geländer dabei nicht in zwei rechten Winkeln statt, sondern hohlkehlenartig in einem Achtel- bis Viertelkreisbogen. Das seitliche Geländer knickt also zunächst unter einen Winkel von 10 bis 30 % nach außen ab und verläuft dann auf einem Kreisbogenabschnitt bis es wieder parallel zur Transportrichtung verläuft.

Die Teilereinrichtungen werden gleichzeitig in Transportrichtung und quer dazu hin- und herbewegt. Die Teilereinrichtungen sind diese an einem gemeinsamen Rahmen montiert. Dieser Rahmen ist zweckmäßig am hinteren, also abstromseitigen Ende um einen Drehpunkt schwenkbar gelagert. Von dem Rahmen erstreckt sich ein Arm entgegen der Transportrichtung und das vordere, aufstromseitige Ende des Arms wird mittels eines Kurvengetriebes in Transportrichtung und quer dazu bewegt. Die Lagerung des abstromseitigen Endes des Rahmens ist so ausgebildet, dass eine Verschiebung des Rahmens in Transportrichtung um eine kurze Strecke von zum Beispiel 15 mm möglich ist.

Das Kurvengetriebe besteht vorzugsweise aus einem Sternrad mit drei oder vier Zacken, wobei die Spitzen der Zacken ähnlich wie bei einem Malteserkreuz mit einer bogenförmigen Linie verbunden sind. Diese Kurvenscheibe wird durch einen Motor angetrieben. Eine Rolle am aufstromseitigen Ende des Armes liegt an der Kurvenscheibe an und kann zum Beispiel mittels einer Feder gegen die Kurvenscheibe vorgespannt sein. In einem Abstand von etwa ⅓ bis ¼ des Durchmessers der Kurvenscheibe ist ein Exzenterbolzen angebracht, der in einen Längsschlitz des Armes ragt. Bei einer Drehung der Kurvenscheibe wird der Arm dadurch quer zur Transportrichtung hin und her verschwenkt. Dadurch dass die Rolle am Umfang der Kurvenscheibe anliegt, wird der Arm und damit die Teilereinrichtungen gleichzeitig in Transportrichtung hin- und herbewegt, und zwar so oft wie es der Anzahl der Zacken der Kurvenscheibe entspricht. Wenn die Kurvenscheibe also vier Zacken hat, so wird die Hin- und Herbewegung quer zur Transportrichtung von vier Hin- und Herbewegungen in Transportrichtung überlagert. Die Kurvenscheibe dreht sich mit 0,5 bis 4 Umdrehungen/Sekunde.

Vorzugsweise werden die Gegenstände mit möglichst geringem Staudruck dem Gasseneinteiler zugeführt. Dies kann erreicht werden, indem in geringem Abstand vor dem Gasseneinteiler ein stationäres Überschubblech auf die Transporteinrichtung gelegt wird, so dass sich die Transportbänder unter dem Überschubblech hindurch bewegen und die Gegenstände durch den Staudruck über das Überschubblech geschoben werden. Die dabei entstehende Reibung wirkt dem Staudruck entgegen und reduziert diesen dadurch. Eine andere Möglichkeit besteht darin, die Transporteinrichtung vor dem Gasseneinteiler zu trennen und die nachfolgende Transporteinrichtung langsamer laufen zu lassen. Schließlich besteht auch noch die Möglichkeit, die Bewegung der Gegenstände dadurch zu bremsen, dass das Geländer etwas enger gestellt wird.

In einer bevorzugten Ausführungsform wird das Auftreten einer Blockierung festgestellt, indem die Bewegung der Gegenstände mittels einer CCD-Kamera oder mittels Lichtschranken oder durch Vergleich der Transportgeschwindigkeit innerhalb der einzelnen Gassen festgestellt wird. Die seitlichen Geländer sind dabei quer zur Transportrichtung verschiebbar angeordnet, so dass ihr Abstand vergrößert werden kann. Tritt eine Blockierung auf, so werden die seitlichen Geländer kurzzeitig auseinander bewegt, wodurch die Verkeilung der Flaschen gelöst oder die gebildete Brücke zerstört wird.

Die gesamte Geländeranordnung ist vorzugsweise in drei Geländer unterteilt, wobei das erste Geländer von der vorausgehenden Station bis zu einem Abstand, der etwas größer als Breite der Transporteinrichtung ist, vor den Gasseneinteiler reicht. Daran schließt sich das zweite Geländer an, das auch als Formatiergeländer bezeichnet wird. Der freie Abstand zwischen den Geländern verengt sich im Bereich des Formatiergeländers, um die zylindrischen Gegenstände in eine geordnete, hexagonale Anordnung zu zwingen. Zur Reduzierung des Staudrucks und um dem größeren Platzbedarf zu entsprechen, den die zylindrischen Gegenstände haben, wenn sie in den Gasseneinteiler einlaufen, vergrößert sich der Abstand zwischen den zweiten Geländern etwa bei einer Stelle, die einen einem Durchmesser der Gegenstände entsprechenden Abstand vor der Spitze des Gasseneinteilers liegt. Vorzugsweise erfolgt diese Vergrößerung des Abstandes der Geländer dabei stufenweise. Dies hat sich als wirksame Maßnahme zur Vermeidung von Blockierungen der Gegenstände vor dem Gasseneinteiler erwiesen. Das sich daran anschließende dritte Geländer erweitert sich, soweit dies wegen des erhöhten seitlichen Platzbedarfs der noch in den Gasseneinteiler einlaufenden Gegenstände notwendig ist, ebenfalls stufenförmig. Das dritte Geländer ist dabei vorzugsweise um einen am hinteren Ende gelegene Drehpunkt schwenkbar ausgeführt, so dass es zur Auflösung von Blockierungen vorne geöffnet werden kann. Das zweite Geländer kann ebenfalls beweglich ausgebildet sein, beispielsweise durch ein ähnliches Kurvengetriebe wie der Gasseneinteiler, wobei die Bewegung auch die gleiche Richtung haben kann. Die Amplitude beträgt beispielsweise 10 bis 15 mm und die Frequenz etwa 0,5 bis 4 Hz.

Ein Ausführungsbeispiel der Erfindung wird nachfolgend anhand der Zeichnung erläutert. Es zeigen:
- Fig. 1: in Draufsicht eine Vorrichtung zum Aufteilen eines ungeordneten Stromes von Getränkeflaschen auf mehrere Gassen;
- Fig. 2: eine Draufsicht ähnlich der von Fig. 1, wobei auch der Antrieb für den Gasseneinteiler dargestellt ist;
- Fig. 3: eine Seitenansicht der Vorrichtung von Fig. 1, und
- Fig. 4: eine Kurvenscheibe mit einer Nutenbahn.

Die Vorrichtung zum Aufteilen eines ungeordneten Stromes von Getränkeflaschen 10 auf mehrere Gassen 11 bis 16 weist eine Transporteinrichtung 20, einen Gasseneinteiler 30 und einen Antrieb 40 für den Gasseneinteiler 30 auf.

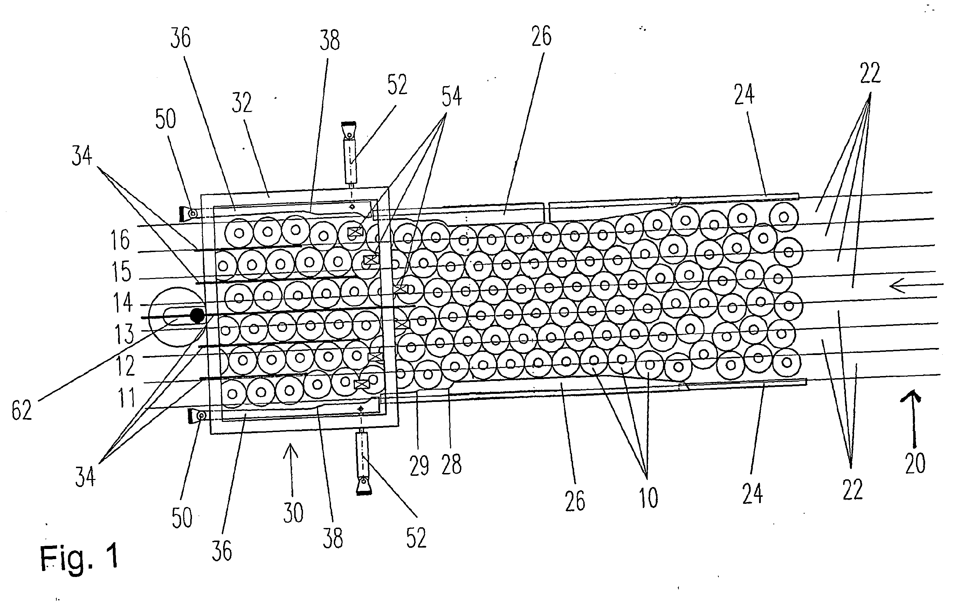

Die Transporteinrichtung 20 setzt sich aus mehreren Transportbändern 22 zusammen, bei denen es sich um Kettengliederförderer handeln kann und die mit möglichst geringem Abstand nebeneinander und auf gleicher Höhe angeordnet sind, so dass sie eine praktisch zusammenhängende Transportfläche bilden, auf der die Getränkeflaschen 10 stehen. Zusammen ergeben die Transportbänder 22 eine Transportfläche, auf der mehrere Getränkeflaschen 10 nebeneinander stehen können, in dem dargestellten Ausführungsbeispiel etwa sechs Getränkeflaschen 10. Die Transportrichtung ist in Fig. 1 durch einen Pfeil angegeben. Die Transporteinrichtung 20 hat erste, seitliche Geländer 24, die äußerst stabil sind, da die Flaschen 10 unter Staudruck transportiert werden, das heißt die Transportbänder 22 laufen schneller als die Flaschen 10 tatsächlich transportiert werden können und beispielsweise von einer nachfolgenden Verpackungsstation aufgenommen werden. Die ersten Geländer 24 erstrecken sich von der vorausgehenden Station, zum Beispiel der Abfüllstation, die in der Zeichnung nicht dargestellt ist, bis zu einer Stelle im Abstand von etwa 0,5 bis 1 m vor dem Gasseneinteiler 30, wobei die ersten Geländer 24 bis dahin einen etwa gleichförmigen Abstand haben. An die ersten Geländer 24 schließen sich zweite Geländer 26 an. Die zweiten Geländer 26 erstrecken sich etwa bis zu dem Gasseneinteiler 30. Die zweiten Geländer 26 sind so profiliert, dass sich ihr Abstand in der Mitte verringert, so dass von oben betrachtet die Transportbahn tailliert ist. An dem dem Gasseneinteiler 30 zugewandten Ende haben die Innenseiten der zweiten Geländer 26 Stufen 28, 29. Die erste Stufe 28 hat eine Höhe von etwa 30 % des Durchmessers der Flaschen 10, während die zweite Stufe nur noch eine Höhe von etwa 10 % hat. An die zweiten Geländer 26 schließen sich dritte Geländer 36 an, die sich etwa bis zum abstromseitigen Ende des Gasseneinteilers 30 erstrecken und in ihrem vorderen Bereich weitere Stufen 38 aufweisen.

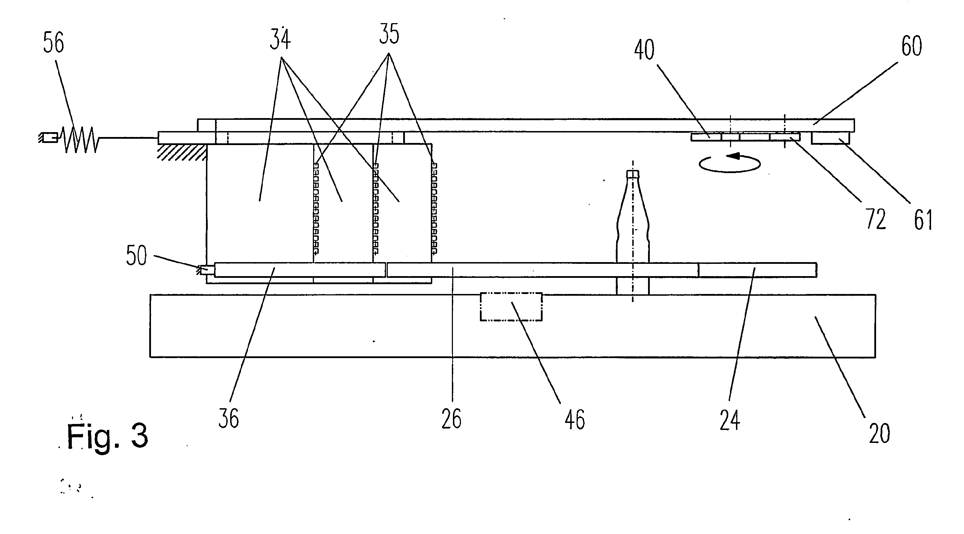

Der Gasseneinteiler 30 hat einen über der Transportbahn angeordneten Rahmen 32, von dem nach unten Platten 34 als Teilereinrichtungen abgehängt sind. Der Rahmen 32 ist in einem ausreichenden Abstand über der Transportbahn angeordnet, so dass die Flaschen 10 unter ihm hindurch transportiert werden können, und die Platten 34 erstrecken sich bis knapp über die Transportfläche (Fig. 3). In dem dargestellten Ausführungsbeispiel sind fünf Platten 34 vorgesehen. Diese bilden zusammen mit den dritten Geländern 36 die sechs Gassen 11 bis 16. Die mittlere Platte 34 steht am weitesten entgegen der Transportrichtung vor. Die beiden sich daran anschließenden Platten 34 sind etwa 1½ bis 2 Flaschendurchmesser zurückgesetzt und die beiden äußersten Platten 34 sind wiederum 1½ bis 2 Flaschendurchmesser zurückversetzt. Verbindet man die vorderen Enden der Platten 34 so ergibt sich dabei ein V. Ein Vielzahl kleiner Rollen 35 mit vertikaler Achse ist enlang der aufstromseitigen Kanten der Platten 34 angeordnet (Fig. 3).

Durch die Stufen 28, 29 und 38 erweitert sich die Transportbahn in dem Bereich, in dem die vorderen Enden der Platten 34 liegen. Diese Erweiterung ist notwendig, da die Flaschen 10 in dem taillierten Bereich zwischen den zweiten Geländern 26 entsprechend einer zweidimensionalen hexagonal dichtesten Kugelpackung angeordnet sind, so dass sechs Reihen von Flaschen mit dem Durchmesser d eine Transportbahn der Breite gleich d + d x 5 x cos 30° ≈ 5,33 x d beanspruchen. In Gassen aufgeteilt beanspruchen sechs Reihen von Flaschen 10 jedoch eine Breite der Transportbahn von 6 x d + die Breite der Platten 34.

Wie in Fig. 1 zu erkennen, sind die Stufen 28, 29 und 38 nicht rechteckig, sondern erweitert sich die Innenseite der zweiten und dritten Geländer 26 zunächst unter einem Winkel von etwa 30 bis 45° in einem hohlkehlenartigen Bogen dessen Krümmungsradius etwa dem der Flaschenoberfläche entspricht.

Die erste Stufe 28 befindet sich in einem Abstand, der etwa dem Flaschendurchmesser entspricht, vor der Spitze der am weitesten vorstehenden, mittleren Platte 34 und die letzte Stufe 38 befindet sich etwa einen halben Flaschendurchmesser vor den am weitesten zurückgesetzten, äußersten Platten 34.

Die dritten Geländer 36 sind um einen Drehpunkt 50 an ihrem hinteren Ende mittels pneumatischer Zylinder 52 verschwenkbar, so dass sie sich an ihrem vorderen Ende zusammen um etwa 10 mm öffnen. Mittels Sensoren 54 werden die in jeder Gasse durchlaufenden Flaschen 10 gezählt. Ergeben sich hierbei Unterschiede innerhalb der einzelnen Gassen 11 bis 16 oder werden keine Flaschen gezählt, so ist dies ein Hinweis darauf, dass vor dem Gasseneinteiler 30 eine Blockierung aufgetreten ist. Es wird dann ein Steuersignal erzeugt, das mittels der pneumatischen Zylinder 52 eine kurze Öffnungs- und Schließbewegung der dritten Geländer 36 auslöst.

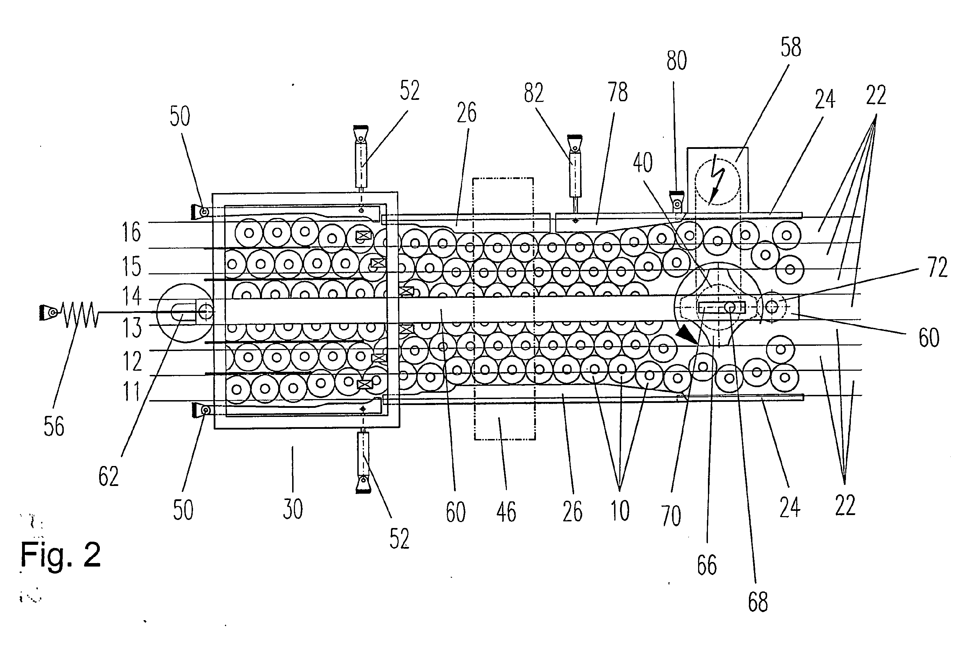

Bei dem in Fig. 2 gezeigten Ausführungsbeispiel ist das eine der beiden zweiten Geländer 26 geteilt und kann der aufstromseitige Teil 78 um einen aufstromseitig gelegenen Drehpunkt 80 mittels eines Zylinder 82 verschwenkt werden. Dadurch kann ein Abstand zwischen den beiden zweiten Geländern 26 verändert und die Formatierung der zylindrischen Gegenstände 10 gegebenenfalls korrigiert werden.

Bei dem Ausführungsbeispiel von Fig. 2 ist ferner eine Überschubplatte 46 etwa auf halber Länge der zweiten Geländer 26 vorgesehen. Diese Überschubplatte 46 liegt unmittelbar auf den Transportbändern 22 auf, so dass die Getränkeflaschen 10 unter dem von den nachfolgenden Getränkeflaschen 10 ausgeübten Druck über die Überschubplatte 46 geschoben werden. Die Reibungskraft der auf der Überschubplatte 46 stehenden Getränkeflaschen 10 wirkt dem von den nachfolgenden Flaschen 10 ausgeübten Druck entgegen, so dass der Staudruck nach der Überschubplatte 46 reduziert ist.

Der Rahmen 32 wird von einem Balken 60 getragen. Aufstromseitig steht der Balken 60 etwa einen halben Meter von dem Rahmen 32 vor und an diesem Ende gleitet er auf einer vorrichtungsfesten Stütze 61 (Fig. 3). Abstromseitig schließt der Balken 60 etwa mit dem Rahmen 32 und den Platten 34 ab und hier ist er in einem Langloch 62 einer Halterung mittels eines Stiftes drehbar gelagert und zugleich in Transportrichtung einige Zentimeter verschiebbar. Durch eine Feder 56 wird der Balken 60 mit dem daran befestigten Gasseneinteiler 30 in Transportrichtung belastet. Am aufstromseitigen Ende des Balkens 60 befindet sich als Antrieb ein Kurvengetriebe 40, das dieses Ende des Balkens 60 in Transportrichtung und quer dazu hin- und herbewegt. Das Kurvengetriebe 40 weist als Kurvenscheibe ein Sternrad 66 auf, das durch vier konkave und auf dem Umfang gleichmäßig verteilte Ausschnitte einer kreisförmigen Scheibe gebildet ist. Das Sternrad 66 ist drehbar gelagert und weist in einem Abstand von etwa ⅓ bis ¼ seines Radius einen Exzenterbolzen 68, der in einen Schlitz 70 des Balken 60 eingreift. An seinem aufstromseitigen Ende trägt der Balken 60 ferner eine Rolle 72, die unter der Kraft der Feder 56 gegen den Umfang des Sternrades 66 elastisch angedrückt wird. Das Sternrad 66 wird durch einen Elektromotor 58 angetrieben. Die Rotation des Sternrades 66 bewirkt zum einen durch den Exzenterbolzen 68 eine Pendelbewegung des Balkens 60 quer zur Transportrichtung und zum anderen dadurch, dass die Rolle 72 unter der Kraft der Feder 56 dem Umfang des Sternrades 66 folgt, eine Vor- und Zurückbewegung des Balkens 60 in Transportrichtung. Die Amplitude beider Bewegungen beträgt einige Zentimeter. Entsprechend dem Verhältnis der Länge des Balkens 60 und der Länge der Platten 34 wird diese Amplitude untersetzt, so dass die vorderen Enden der Platten 34 eine entsprechende Bewegung jedoch mit einer Amplitude von nur etwa 8 mm ausführen. Wie man in Fig. 3 erkennt, ist das Sternrad 66 unter dem Balken 60 angeordnet und stützt dadurch dieses Ende des Balkens 60 ab.

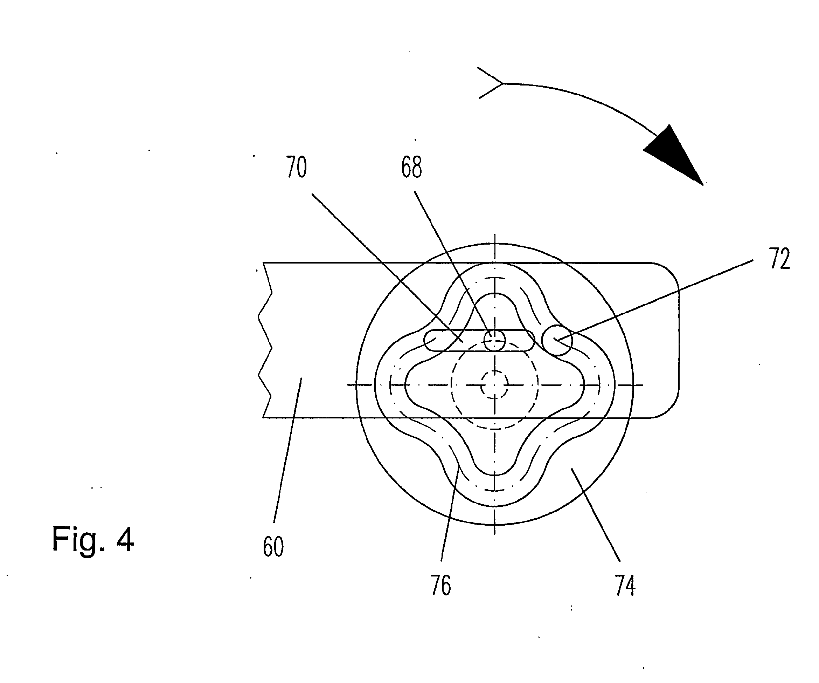

Bei dem Ausführungsbeispiel von Fig. 4 ist das Sternrad 66 durch eine Scheibe 74 mit einer Nutbahn 76 ersetzt, wobei der Verlauf der Nutbahn 76 etwa dem Umfang des Sternrades 66 entspricht, so dass das Ende des Balkens 60 die gleiche Schwenk-und Translationsbewegung ausführt und daher auch der Gasseneinteiler 30 und das vordere Ende der Platten 34 dieselben überlagerten orbitalen und linearen Bewegungen ausführen. Bei der Ausführungsform von Fig. 4 entfällt die Feder 56 da die Rolle 72 in der Nutbahn 76 zwangsgeführt ist.

Das Sternrad 66 kann auch drei oder eine andere Anzahl von konkaven Aussparungen aufweisen und das Ende des Balkens 60 führt jeweils eine entsprechende Anzahl von Vor- und Zurückbewegungen in Transportrichtung je Hin- und Herbewegung quer zur Transportrichtung aus. Das Sternrad 66 beziehungsweise die Scheibe 74 drehen sich etwa mit einer Geschwindigkeit von 0,5 bis 4 Umdrehungen/Sekunde.

Im Allgemeinen genügt bereits die Vibration oder Drehbewegung des Gasseneinteilers 30 um ein gegenseitiges Verkeilen oder eine Brückenbildung der Flaschen 10 wirkungsvoll zu verhindern. Grundsätzlich soll der Staudruck dabei vor dem Gasseneinteiler 30 möglichst gering sein. Dies wird durch die Anordnung einer Überschubplatte 46 (Fig. 2) erreicht. Eine Verringerung des Staudrucks vor dem Gasseneinteiler 30 kann auch dadurch erreicht werden, dass vor dem Gasseneinteiler 30 die Flaschen 10 auf eine langsamer laufende Transporteinrichtung übergesetzt werden.

Die Stufen 28, 29 und 38 sind eine zusätzliche Maßnahme, um in besonders gelagerten Fällen ein Verkeilen und eine Brückenbildung zu verhindern. Jedesmal wenn eine Flasche 10 entlang einer Stufe 28, 29, 38 gleitet, führt dies zu einer Erschütterung der benachbarten Flaschen 10, wodurch eventuelle Verkeilungen gelöst werden. Besonders bewährt hat sich hierbei die hohlkehlenartige Form der Stufen, da hierbei die Flaschen 10 nach Überfahren der Stufe auf dem gesamten Kreisbogen der Hohlkehle auftreffen, wodurch sich der Aufprall auf eine größere Fläche verteilt und die betreffende Flasche 10 selbst weniger verformt wird, jedoch auf die benachbarten Flaschen einen relativ starken Ruck ausübt.

Wenn trotz dieser beiden Maßnahmen noch Verkeilungen oder Brückenbildungen auftreten, so kann schließlich durch ein kurzzeitiges Öffnen und wieder Schließen der vorderen Enden der dritten Geländer 36 eine Verkeilung aufgelöst oder eine gebildete Brücke zerstört werden.

### Liste der Bezugszeichen

- 10: Getränkeflasche
- 11 - 16: Gasse
- 20: Transporteinrichtung
- 22: Transportband
- 24: erstes Geländer
- 26: zweites Geländer
- 28, 29: Stufen
- 30: Gasseneinteiler
- 32: Rahmen
- 34: Platten, Teilereinrichtung
- 35: Rollen
- 36: drittes Geländer
- 38: Stufen
- 40: Kurvengetriebe
- 46: Überschubplatte
- 50: Drehpunkt
- 52: pneumatischer Zylinder
- 54: Sensor
- 56: Feder
- 58: Elektromotor
- 60: Balken
- 61: Stütze
- 62: Langloch
- 66: Sternrad
- 68: Exzenterbolzen
- 70: Schlitz
- 72: Rolle
- 74: Scheibe
- 76: Nutbahn
- 78: Teil von 26
- 80: Drehpunkt
- 82: Zylinder

## Patentansprüche

1. Vorrichtung zum Aufteilen eines ungeordneten Stroms von Gegenständen (10) auf mehrere Gassen (11 bis 16), in denen die Gegenstände (10) einzeln aufeinander folgend transportiert werden, mit einer Transporteinrichtung (20) für die Gegenstände (10), die ein oder mehrere angetriebene Transportbänder (22) und seitliche Geländer (24) aufweist, mit einem Gasseneinteiler (30), der mehrere bewegliche Teilereinrichtungen (34), die den Strom von transportierten Gegenständen (10) teilen, und einen Rahmen (32), an dem die Teilereinrichtungen (34) befestigt sind, aufweist, und mit einer Einrichtung (40) zum Antrieb des Gasseneinteilers (30), **dadurch gekennzeichnet, dass** die Teilereinrichtungen (34) mittels der Antriebseinrichtung (40) gleichzeitig in Transportrichtung und quer dazu eine Hin- und Herbewegung ausführen.

2. Vorrichtung nach Anspruch 1, **dadurch gekennzeichnet, dass** die mittlere Teilereinrichtung (34) entgegen der Transportrichtung vorsteht und die seitlichen Teilereinrichtungen (34) gestaffelt zurückgesetzt sind.

3. Vorrichtung nach Anspruch 1 oder 2, **dadurch gekennzeichnet, dass** der Abstand zwischen den seitlichen Geländern (26, 36) in Transportrichtung stufenweise vergrößert ist, wobei die Vergrößerung an einer Stelle einsetzt, die etwa den Durchmesser eines Gegenstandes (10) vor der Spitze der vordersten Teilereinrichtung (34) entspricht.

4. Vorrichtung nach Anspruch 3, **dadurch gekennzeichnet, dass** die Stufen (28, 29, 38) hohlkehlartig ausgerundet sind.

5. Vorrichtung nach einem der Ansprüche 1 bis 4, **dadurch gekennzeichnet, dass** das Geländer unterteilt ist und der Teil (36) des Geländers, der sich im Bereich des Gasseneinteilers (30) befindet, nach außen bewegt werden kann.

## Claims

1. Apparatus for the distribution of a random stream of items (10) into several lanes (11 to 16) in which the items (10) are transported individually one after the other, comprising a transport device (20) for the items (10) which has one or more driven conveyor belts (22) and side rails (24), a lane divider (30) which has a plurality of dividers (34) which divide the stream of transported items (10) and a frame (32) to which the dividers (34) are fixed, and a device (40) for driving the lane divider, **characterized in that** the dividers (34) carry out, by means of the driving device (40), a back-and-forth movement in the direction of transport and transversely to it at the same time

2. Apparatus according to claim 1, **characterized in that** the middle divider (34) projects against the direction of transport and the side dividers (34) are set back staggered.

3. Apparatus according to claim 1 or 2, **characterized in that** the distance between the side rails (26, 36) is increased stepwise in the direction of transport, the increase commencing at a point which corresponds approximately to the diameter of an item (10) in front of the tip of the frontmost divider (34).

4. Apparatus according to claim 3, **characterized in that** the steps (28, 29, 38) are rounded in a grooved manner.

5. Apparatus according to any one of claims 1 to 4, **characterized in that** the rail is divided and the part (36) of the rail in the area of the lane divider (30) can be moved outwards

## Revendications

1. Dispositif pour répartir un flux désordonné d'objets (10) dans plusieurs couloirs (11 à 16) dans lesquels les objets (10) sont transportés individuellement en se suivant, avec un dispositif de transport (20) pour les objets (10) qui comprend une ou plusieurs bande(s) transporteuse(s) entraînée(s) (22) et des rambardes latérales (24), avec un élément de répartition en couloirs (30) qui comprend plusieurs dispositifs de répartition mobiles (34) qui trient le flux d'objets (10) transportés et un cadre (32) sur lequel sont fixés les dispositifs de répartition (34) et avec un dispositif (40) pour l'entraînement de l'élément de répartition en couloirs (30), **caractérisé en ce qu'**au moyen du dispositif d'entraînement (40), les dispositifs de répartition (34) effectuent simultanément dans la direction de transport et transversalement à celle-ci un mouvement alternatif d'aller et de retour.

2. Dispositif selon la revendication 1, **caractérisé en ce que** le dispositif de répartition central (34) est en dépassement dans le sens opposé à la direction de transport et **en ce que** les dispositifs de répartition latéraux (34) sont décalés de manière échelonnée vers l'arrière.

3. Dispositif selon la revendication 1 ou 2, **caractérisé en ce que** l'espacement entre les rambardes latérales (26, 36) s'accroît de manière échelonnée dans la direction de transport, l'accroissement débutant à un endroit qui correspond approximativement au diamètre d'un objet (10) devant la pointe du dispositif de répartition (34) situé le plus à l'avant.

4. Dispositif selon la revendication 3, **caractérisé en ce que** les paliers (28, 29, 38) sont arrondis à la manière de gorges.

5. Dispositif selon l'une quelconque des revendications 1 à 4, **caractérisé en ce que** la rambarde est divisée et **en ce que** la partie (36) de la rambarde qui se trouve dans la zone de l'élément de répartition en couloirs (30) peut être déplacée vers l'extérieur.
